# EUROPEAN PATENT APPLICATION

(11) **EP 0 781 653 A2**
(43) Date of publication of application: **02.07.1997**
(21) Application number: 96309492.5
(22) Date of filing: 24.12.1996
(51) Int. Cl.: B32B 31/30, B29C 59/14, B29C 59/16

(54) **Process for producing laminate**

(30) Priority: 27.12.1995 JP 341156/95
(71) Applicant: SUMITOMO CHEMICAL COMPANY LIMITED, Osaka-shi, Osaka 541 (JP)
(72) Inventor: Hayashida, Haruo, Chiba-shi (JP); Ishibashi, Fumio, Ichihara-shi (JP); Shigematsu, Yuji, Toyonaka-shi (JP); Takahata, Hiroaki, Ichihara-shi (JP)
(74) Representative: Cresswell, Thomas Anthony

(57) **Abstract**

A non-anchor extrusion coating process for producing a laminate, which process comprises the steps of:
(a) subjecting at least one surface of a substrate to surface activation in an atmosphere of an inert gas,
(b) melt-extruding a resin to form an extrudate in the form of film, and
(c) placing at least one surface of the extrudate in contact with said at least one activated surface of the substrate, and adhering the extrudate to the substrate by pressure to obtain a laminate. The laminate of resin and metal or plastic substrate which is produced is improved in film adhesive strength and is usable as a packaging material.

## Description

### FIELD OF THE INVENTION

The present invention relates to a process for producing a laminate by means of a non-anchor extrusion coating process. In more particular, it relates to a process for producing a laminate of a substrate and a resin, their surfaces being firmly bonded with one another without any anchor coating agent.

### BACKGROUND OF THE INVENTION

It is generally practiced to bond different kinds of materials each in a form of film, such as plastic film, paper and metal foil, to produce a laminated film or sheet (these being hereinafter referred to as a laminate) which has characteristic properties such as good strength, gas barrier efficiency, moisture resistance, heat sealability and appearance not attainable by individual component materials alone. The laminates thus obtained are in wide use mainly as packaging materials and the like.

Such laminates can be produced, for example, by a dry lamination process, wet lamination process, hot lamination process, extrusion coating process and coextrusion coating process. These processes may be used as desired according to their characteristic features. For forming a heat sealable layer on a substrate in packaging materials, the extrusion coating process is in wide use because of its advantage in cost. The resins generally used as the heat sealable layer include polyolefin resins, such as polyethylene, polypropylene and ethylene copolymers, and ionomer resins, among which polyolefin resins are predominantly used owing to their advantage in cost.

These resins are generally extrusion-coated on the surface of a substrate onto which an anchor coating agent has been applied beforehand to perform the adhesion between the resin and the substrate. The anchor coating agent is prepared in general by diluting adhesives of organic titanate type, organic isocyanate type and polyethyleneimine type or the like with an organic solvent, such as toluene, ethyl acetate, ethanol and hexane.

However, the above-mentioned processes, which use the anchor coating agent, involve a number of problems as described below. The production cost increases due to the use of expensive anchor coating agents. They require complicated process steps of application and drying of the anchor coating agent. Organic solvents harmful to the human body escape during the evaporation and drying steps of the organic solvents contained in the anchor coating agent to cause hygienic problems in working environment and surrounding environment. The use of flammable organic solvents involve the risk of fire. The organic solvents may remain in the laminate to cause undesirable odor which imposes restriction on the use of the laminate for food packaging and like uses.

As a process which uses no anchor coating agent, JP-A-4-368845 discloses a process which comprises melt-kneading an ethylene copolymer obtained by copolymerizing (a) ethylene, (b) an unsaturated polybasic acid and (c) an unsaturated monomer selected from acrylic acid lower alkyl esters, methacrylic acid lower esters and vinyl esters, extruding the copolymer at a temperature of 150-330°C to form a film-like extrudate, and subjecting the extrudate surface to an ozone treatment, followed by pressure-adhesion to a substrate, thereby producing a laminate. However, this process, which uses the afore-mentioned specific ethylene copolymer, is disadvantageous in production cost. Moreover, with the increase of the low melting point component, the roll release at the time of extrusion coating tends to be poor and the range of workable temperature in extrusion coating is restricted. Furthermore, the process may require a complicated operation of changing resins in the extruder.

Further, there are reported a process in which the surface of an ethylene-α-olefin copolymer to be bonded to a substrate is ozone-treated by using a conventional ozone treating apparatus and then subjected to pressure-adhesion to a substrate without application of an anchor coating agent, and a process for producing a laminate in which an adhesive resin obtained by graft-modifying a polyolefin resin with an unsaturated carboxylic acid or the like is directly subjected to pressure-adhesion to a substrate by using a coextrusion coating apparatus (Convertech 8, p. 36 (1991)). However, the laminates obtained by these processes are unsatisfactory in adhesive strength between the resin and the substrate and hence limited in their applications. Moreover, the process which uses the specific adhesive resin is not advantageous, because a coextrusion apparatus is indispensable, a production cost is increased and operation of changing resins in the extruder is complicated.

EP-0644032 discloses a process for producing a laminate, which comprises subjecting the surface of a plastic substrate to oxidation treatment, subjecting the surface of a polyolefin resin resulted from melt-extrusion to ozone treatment, and then placing both surfaces with one another, followed by pressure-adhesion.

Though the laminates obtained by this process have a fairly improved film adhesive strength, further improvement is now required.

The present inventors have made extensive study to develop a process for producing a laminate of a substrate and a resin having an improved film adhesive strength by means of a non-anchor extrusion coating process. As the result, the inventors have found that the film adhesive strength can be improved by subjecting the substrate to a surface treatment in an inert gas, and thus accomplished the present invention. The term "non-anchor extrusion coating process" is intended to mean a production process of a laminate using an extrusion coating process but no anchor coating agent.

### SUMMARY OF THE INVENTION

According to the present invention, there is provided a process for producing a laminate by means of a non-anchor extrusion coating process, which comprises the steps of:
(a) subjecting at least one surface of a substrate to surface activation in an atmosphere of an inert gas,
(b) melt-extruding a resin to form an extrudate in the form of film, and
(c) placing at least one surface of the extrudate into contact with at least one activated surface of the substrate, followed by pressure adhesion to obtain a laminate.

According to the present invention, there is further provided a laminate obtained by the above-mentioned process.

The present invention is described in detail below.

### DETAILED DESCRIPTION OF THE INVENTION

The substrate used in the step (a) is in the form of film or sheet. It may be either an oriented product or a non-oriented product. It may further be a coated product, textile fabric, or nonwoven fabric. The substrate may be made of metals or plastics, or it may be a laminated product thereof with other materials, such as aluminum foil, iron foil or paper. Further, it may be printed beforehand. Particularly preferred of these are plastic substrates.

Though the thickness of the substrate is not particularly restricted so long as it permits extrusion coating processing, it is preferably 1,000 µm or less, more preferably in the range of 5-500 µm.

The plastic substrate used in the present invention may be a film or sheet of a single resin, such as nylon, polyester resin, saponification product of ethylene-vinyl acetate copolymer, poly(vinyl alcohol), polypropylene resin, cellophane, cellulose resin, poly(vinylidene chloride), polystyrene, poly(vinyl chloride), polycarbonate, poly(methyl methacrylate), polyurethane, fluororesin and polyacrylonitrile; a laminated film or sheet of these; and further an oriented product, coated product and textile fabric of these. The substrate used may further be a laminated product of the above-mentioned plastic substrate with aluminum foil, iron foil, paper, etc. in which at least one of the above-mentioned resins and ethylenic resins is provided at the bonding surface. These plastic substrates may be printed beforehand. In the present invention, those having been subjected to conventional surface treatments such as corona discharge treatment, plasma treatment and flame treatment may be used.

The thickness of the plastic substrate is not particularly restricted so long as it permits extrusion coating processing. It is preferably 1,000 µm or less, more preferably in the range of 5-500 µm.

The substrate used in the present invention may further be, for example, a laminated product of a plastic substrate and a single metal such as aluminum; a laminated product of an aluminum substrate, plastic substrate and paper; or aluminum vapor-deposited plastic substrate. It may also be provided with an inorganic substance, such as silica, at the bonding surface with the plastic substrate.

Particularly preferred of these plastic substrates are polyester substrates.

The surface activation in the step (a) is carried out in order to accelerate the chemical reaction between the surface of the substrate and the surface of the extrudate formed in the step (b), thereby performing the desired adhesion of the two surfaces.

The inert gas used includes, for example, argon, helium, krypton, neon, xenon and nitrogen, and they may be used each alone or as a mixture of two or more thereof. Among them, nitrogen is preferred from an industrial point of view. The inert gas atmosphere may contain 1% by volume or less, preferably 0.1% by volume or less, more preferably 0.01% by volume or less, of oxygen. The surface activation includes, for example, electron beam irradiation treatment, low pressure plasma treatment, atmospheric pressure plasma treatment, and corona discharge treatment.

The electron beam irradiation can be conducted by irradiating the substrate surface with an electron beam generated by an electron beam apparatus. The electron beam irradiation apparatus may be an apparatus capable of irradiating a uniform electron beam preferably in the form of a curtain from a linear filament, and includes, for example, a curtain type apparatus.

An exposure of the electron beam irradiation is preferably 5 kGy or more, more preferably 15 kGy or more, still more preferably 30 kGy or more. The upper limit of the exposure of the electron beam irradiation is not particularly limited and is preferably about 200 kGy. The exposure can be determined depending on the line speed of the substrate at the entrance of the irradiation apparatus. The effect of irradiation extends over the whole substrate in the thickness direction merely by irradiation to one side of the substrate, owing to the property of ionizing radiation to penetrate a material body. Therefore, the irradiation can be conducted to any one side of a substrate or to the both sides thereof so long as an intended exposure can be secured.

The low pressure plasma treatment can be conducted by electronically exciting an inert gas with a plasma jet at an output of 200-1,000 W under a low pressure of 0.1-5 Torr, removing charged particles from the gas to make the excited inert gas neutral, and bringing the neutral excited gas into contact with the substrate surface. The treating time is preferably 10-60 seconds, more preferably 20-40 seconds.

The atmospheric pressure plasma treatment can be conducted by applying an alternating voltage of 3-5 KHz and 2-3,000 V between electrodes in an inert gas to generate an excited inert gas similar to that in the low pressure plasma treatment, and bringing the gas into contact with the substrate surface. The treating time is preferably 10-60 seconds, more preferably 20-40 seconds.

The corona discharge treatment can be conducted by passing the substrate through a corona atmosphere generated with a conventional corona discharging apparatus. The corona discharge density is preferably 10 W·min./m² or more.

The resin used in the step (b) of the present invention includes, for example, polyethylene resins, polypropylene resins, ethylene-vinyl ester copolymer resins, and ethylene-(meth)acrylic ester copolymer resins. They are used each alone or as a mixture of two or more thereof. If necessary, other resins may be mixed within the range of less than 50% by weight.

The polyethylene resins include, for example, high density polyethylene and copolymers of ethylene with an α-olefin of 3-18 carbon atoms, such as propylene, butene-1, hexene-1, octene-1 and decene, respectively produced by ionic polymerization, and low density polyethylene produced by high pressure radical polymerization. The comonomer used for copolymerization with ethylene may be either of one kind or of plural kinds. The content of the comonomer is preferably 30% by weight or less, more preferably 20% by weight or less. These polyethylene resins can be used either alone or as a mixture thereof.

The polypropylene resins include, for example, homopolymer of propylene and copolymers of propylene with an α-olefin of 2 or 4-18 carbon atoms. The α-olefins include, for example, ethylene, butene-1, hexene-1 and octene-1. The olefins can be used either alone or in a combination of two or more thereof. The content of the α-olefin in the propylene-α-olefin copolymer is preferably 0.1-40% by weight, more preferably 1-30% by weight.

The polypropylene resins are not particularly limited as to the process for production thereof. They may be produced, for example, by ionic polymerization.

Ethylene-vinyl ester copolymer resins and ethylene-(meth)acrylic ester copolymer resins can be produced by radical polymerization. They can be obtained by copolymerizing ethylene with a radical-polymerizable monomer of the above-mentioned type.

The vinyl esters used for the ethylene-vinyl ester copolymers include, for example, vinyl acetate, vinyl propionate and vinyl neoacetate.

The (meth)acrylic esters used for the (meth)acrylic ester copolymers include, for example, unsaturated carboxylic acid esters having 4-8 carbon atoms such as acrylic esters, e.g., methyl acrylate, ethyl acrylate, n-propyl acrylate, isopropyl acrylate, n-butyl acrylate, t-butyl acrylate and isobutyl acrylate; and methacrylic esters, e.g., methyl methacrylate, ethyl methacrylate, n-propyl methacrylate, isopropyl methacrylate, n-butyl methacrylate, t-butyl methacrylate and isobutyl methacrylate. These comonomers can be used either alone or in a combination of two or more thereof.

The content of the comonomer in the ethylene-vinyl acetate copolymers, or ethylene-acrylic and ethylene-methacrylic ester copolymers is preferably 30% by weight or less, more preferably 20% by weight or less.

From the viewpoint of obtaining a satisfactory processability, the polyethylene resins, ethylene-vinyl ester copolymer resins, and ethylene-(meth)acrylic ester copolymer resins preferably have a melt flow rate (MFR) at 190°C in the range of 1-100 g/10 min and the polypropylene resins preferably have a MFR at 230°C in the range of 1-100 g/10 min.

The resin used in the step (b) of the present invention may be incorporated with known additives, for example, antioxidants, antiblocking agents, weather-proofing agents, neutralizing agents, flame retarders, antistatics, antifogging agents, lubricants, dispersants, pigments, and organic or inorganic fillers within limits not deleterious to the effect of the present invention.

The melt-extrusion in the step (b) can be carried out to form an extrudate in the form of film in a conventional manner. The extrusion temperature is varied depending on the kind of the resin to be used, and can be selected from a range preferably from 180 to 340°C, more preferably from 210 to 330°C.

In the present invention, it is preferred to subject the extrudate formed in the form of film to ozone treatment at least on the surface thereof which will be come into contact with the surface of the substrate.

The ozone treatment can be conducted, for example, by continuously blowing an ozone-containing gas such as air against the extrudate film preferably in the molten state or immediately before the successive contact with the activated surface of the substrate. It is recommendable to blow the gas against the whole of the surface of the extrudate film which will come into contact with the surface of the substrate. The amount of ozone blown in this treatment is preferably in the range of 1-12 mg/m².

At least one surface of the extrudate film, preferably subjected to the ozone treatment is then placed into contact with at least one activated surface of the substrate, followed by pressure adhesion. The pressure adhesion can be carried out in a conventional manner, for example, using a conventional extrusion laminator or a means comprising a cooling roll and a nip roll, thereby obtaining a desired laminate.

In the present invention, it is preferred from a viewpoint of productivity to subject the substrate immediately after the surface activation to contact with the surface of the extrudate film preferably ozone-treated and successive pressure adhesion. When the surface-activated substrate is desired to be stored before the said contact of two surfaces, followed by the pressure adhesion, it is preferred to store it at a temperature lower than the glass transition temperature of the plastics used as the substrate.

The laminate resulted from the step (c) is preferably subjected to aging. The aging can be carried out by allowing the resulting laminate to stand in a conventional oven or thermostat at a predetermined temperature. The temperature ranges preferably from 30 to 60°C, more preferably from 40 to 50°C, and the aging time preferably from 1 to 120 hours, more preferably from 10 to 80 hours.

The laminate produced by the process of the present invention includes a single-faced laminate having two layers, a double-faced laminate having three layers, which has resin layers on the both sides of the substrate layer, a sandwiched laminate having three layers, which has substrate layers on the both sides of the resin layer, and the combination thereof having four or more layers.

On the resin layer of the single-faced laminate, another plastic film or sheet may be bonded to produce a final product of so-called sandwich type or tandem type.

According to the present invention, a laminate having an improved film adhesive strength can be produced by means of a non-anchor extrusion coating process which is free from complication in operations, free from the risk of causing environmental problems and advantageous in production cost.

Moreover, the thus produced laminate is almost odorless and therefore effectively used as packaging materials, e.g., food packaging materials and medicinal packaging materials, and as industrial materials.

The present invention is described in detail below with reference to Examples, but the invention is not limited thereto.
Test and evaluation method of the film adhesive strength in Examples and Comparative Examples:

A laminate was slit to a width of 15 mm to prepare a specimen. The film adhesive strength was evaluated by a peel strength measured by attaching the specimen to an autostrain type tensile tester (mfd. by Toyo Seiki Co., Ltd.) and peeling apart the specimen at an angle of 180° at a stretching velocity of 200 mm/min.

### Example 1

A PET (biaxial oriented polyethylene-terephthalate film) substrate was surface-treated by attaching the substrate to an electron beam irradiation apparatus (CB200/45/300 Type, mfd. by Iwasaki Denki K.K.) adjusted to an oxygen concentration of 90 ppm by volume or less under a nitrogen gas atmosphere and subjecting the substrate to electron beam irradiation at an acceleration voltage of 165 KV and an exposure of 15 kGy at a treating speed of 10 m/min.

The PET substrate was then placed such that the electron beam irradiated surface might become the surface to be laminated, and was fed from the feeder of a laminator at a processing speed of 100 m/min. Along therewith, a LLDPE 1 (linear low density polyethylene, "SUMIKATHENE" L5816, mfd. by Sumitomo Chemical Co., Ltd., MFR 10 g/10 min, density 0.917 g/cm³) and another LLDPE 2 (linear low density polyethylene, "SUMIKATHENE" CL8071, mfd. by Sumitomo Chemical Co., Ltd., MFR 10 g/10 min., density 0.915 g/cm³) were respectively melt-kneaded with extruders 1 and 2 each 65 mm in bore diameter and extruded through a dual slot T-die each at a resin temperature of 300°C to form a molten film 450 mm in width and 40 µm in total thickness. The extruder 1 side of the film was treated with ozone by blowing an air having an ozone concentration of 15 g/m³ at a rate of 1.5 m³/hour from a nozzle provided at a position 30 mm under the die against that surface of the molten film which was to be bonded with the PET substrate. The ozone treatment amount was 8 mg/m² relative to the unit area of passing molten film. Then, a laminate of the PET substrate and the resin obtained was taken up with a winding machine.

The results thus obtained are shown in Table 1.

### Example 2

The laminate prepared in Example 1 was further subjected to aging treatment at a surrounding temperature of 45°C for 48 hours.

The results thus obtained are shown in Table 1.

### Example 3

The same procedure as in Example 1 was repeated except that the exposure of electron beam irradiation was changed from 15 kGy to 100 kGy.

The results thus obtained are shown in Table 1.

### Example 4

The laminate obtained in Example 3 was further subjected to aging treatment at a surrounding temperature of 45°C for 48 hours.

The results thus obtained are shown in Table 1.

### Example 5

The same procedure as in Example 3 was repeated except that the treatment with ozone for the molten resin film was not conducted.

The results thus obtained are shown in Table 2.

### Example 6

The laminate obtained in Example 5 was further subjected to aging treatment at a surrounding temperature of 45°C for 48 hours.

The results thus obtained are shown in Table 2.

### Example 7

The same procedure as in Example 1 was repeated except that an atmospheric pressure plasma treatment described below was conducted in place of the electron beam irradiation treatment.

The atmospheric pressure plasma treatment was conducted with an atmospheric pressure plasma treating apparatus manufactured by E.C. Kagaku K.K. The inner atmosphere of the apparatus was adjusted by replacing oxygen in the apparatus with argon, and mixing a small amount of methane. Then the PET substrate was attached to the apparatus and subjected to atmospheric pressure plasma treatment by applying an alternating voltage of 3 KHz and 100 W between electrodes for 20 seconds while the substrate was being fed at a treating speed of 10 m/min.

The results thus obtained are shown in Table 2.

### Example 8

The laminate obtained in Example 7 was further subjected to aging treatment at a surrounding temperature of 45°C for 48 hours.

The results obtained are shown in Table 2.

### Example 9

The same procedure as in Example 1 was repeated except that the substrate was changed to an ONy (biaxial oriented nylon film) substrate, the exposure of electron beam irradiation to 30 kGy and the ozone treatment amount to 5 mg/m².

The results obtained are shown in Table 3.

### Example 10

The laminate obtained in Example 9 was further subjected to aging treatment at a surrounding temperature of 45°C for 48 hours.

The results obtained are shown in Table 3.

### Example 11

The same procedure as in Example 9 was repeated except that the exposure of electron beam irradiation was changed from 30 kGy to 100 kGy.

The results obtained are shown in Table 3.

### Example 12

The laminate obtained in Example 11 was further subjected to aging treatment at a surrounding temperature of 45°C for 48 hours.

The results obtained are shown in Table 3.

### Example 13

The plasma treatment of a substrate was conducted by using a microwave plasma treating apparatus (TMZ-9602 C Type, mfd. by Toshiba K.K.). An ONy (biaxial oriented nylon film) substrate was allowed to stand in a low pressure plasma treatment vessel, the inner atmosphere of the vessel was adjusted to a degree of vacuum of 0.5 Torr by using an inert gas (nitrogen), and the substrate was subjected to low pressure plasma treatment at an output of 800 W for 30 seconds.

The treated substrate was then placed such that the low pressure plasma treated surface might become the surface to be laminated, and was fed from the feeder of laminator at a processing speed of 80 m/min. Along therewith, the same resins for lamination as used in Example 1 were respectively melt-kneaded with extruders 1 and 2 each 65 mm in bore diameter and extruded through a dual slot T-die each at a resin temperature of 305°C to form a molten film 450 mm in width and 60 µm in total thickness. The extruder 1 side of the film was treated with ozone by blowing an air having an ozone concentration of 17 g/m³ at a rate of 1.5 m³/hour from a nozzle provided at a position 30 mm under the die against the surface of the molten film which was to be adhered with the ONy substrate. The ozone treatment amount was 12 mg/m² relative to unit area of passing molten film. Then a laminate of the ONy substrate and the resin obtained was taken up with a winding machine.

The results thus obtained are shown in Table 4.

### Example 14

The laminate obtained in Example 13 was further subjected to aging treatment at a surrounding temperature of 45°C for 48 hours.

The results obtained are shown in Table 4.

### Example 15

The same procedure as in Example 9 was repeated except that the substrate was changed to an Al substrate (aluminum foil) and the ozone treatment amount to 10 mg/m².

The results obtained are shown in Table 4.

### Example 16

The laminate obtained in Example 15 was further subjected to aging treatment at a surrounding temperature of 45°C for 48 hours.

The results obtained are shown in Table 4.

### Comparative Example 1

The same procedure as in Example 1 was repeated except that no surface treatment of the substrate was conducted and the ozone treatment amount was changed to 10 mg/m³.

The results obtained are shown in Table 5.

### Comparative Example 2

The laminate obtained in Comparative Example 1 was further subjected to aging treatment at a surrounding temperature of 45°C for 48 hours.

The results obtained are shown in Table 5.

### Comparative Example 3

The same procedure as in Example 9 was repeated except that no surface treatment of the substrate was conducted and the ozone treatment amount was changed to 10 mg/m².

The results obtained are shown in Table 5.

### Comparative Example 4

The laminate obtained in Comparative Example 3 was further subjected to aging treatment at a surrounding temperature of 45°C for 48 hours.

The results obtained are shown in Table 5.

### Comparative Example 5

The same procedure as in Example 15 was repeated except that no surface treatment of the substrate was conducted.

The results obtained are shown in Table 6.

### Comparative Example 6

The laminate obtained in Comparative Example 5 was further subjected to aging treatment at a surrounding temperature of 45°C for 48 hours.

The results obtained are shown in Table 6.

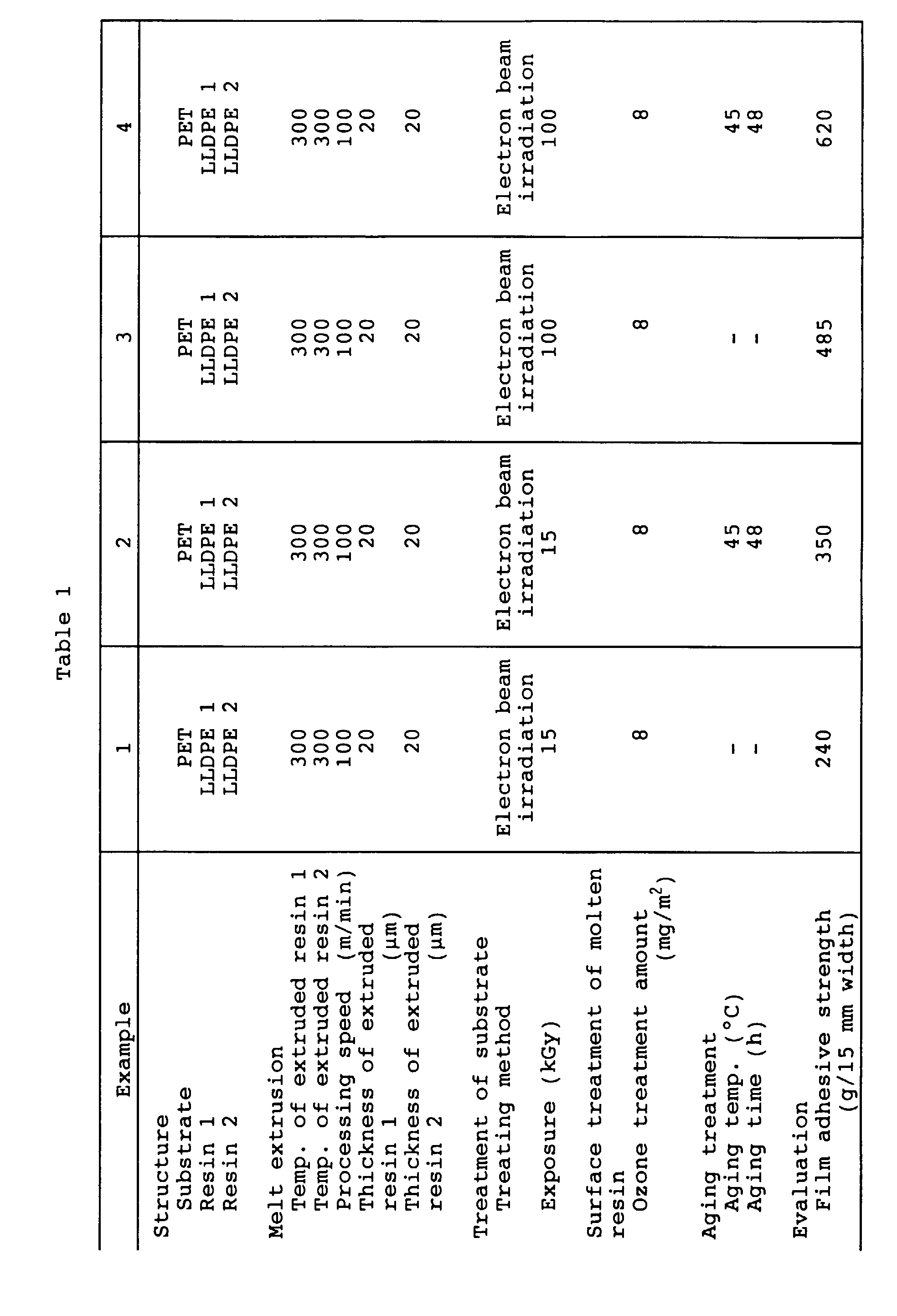

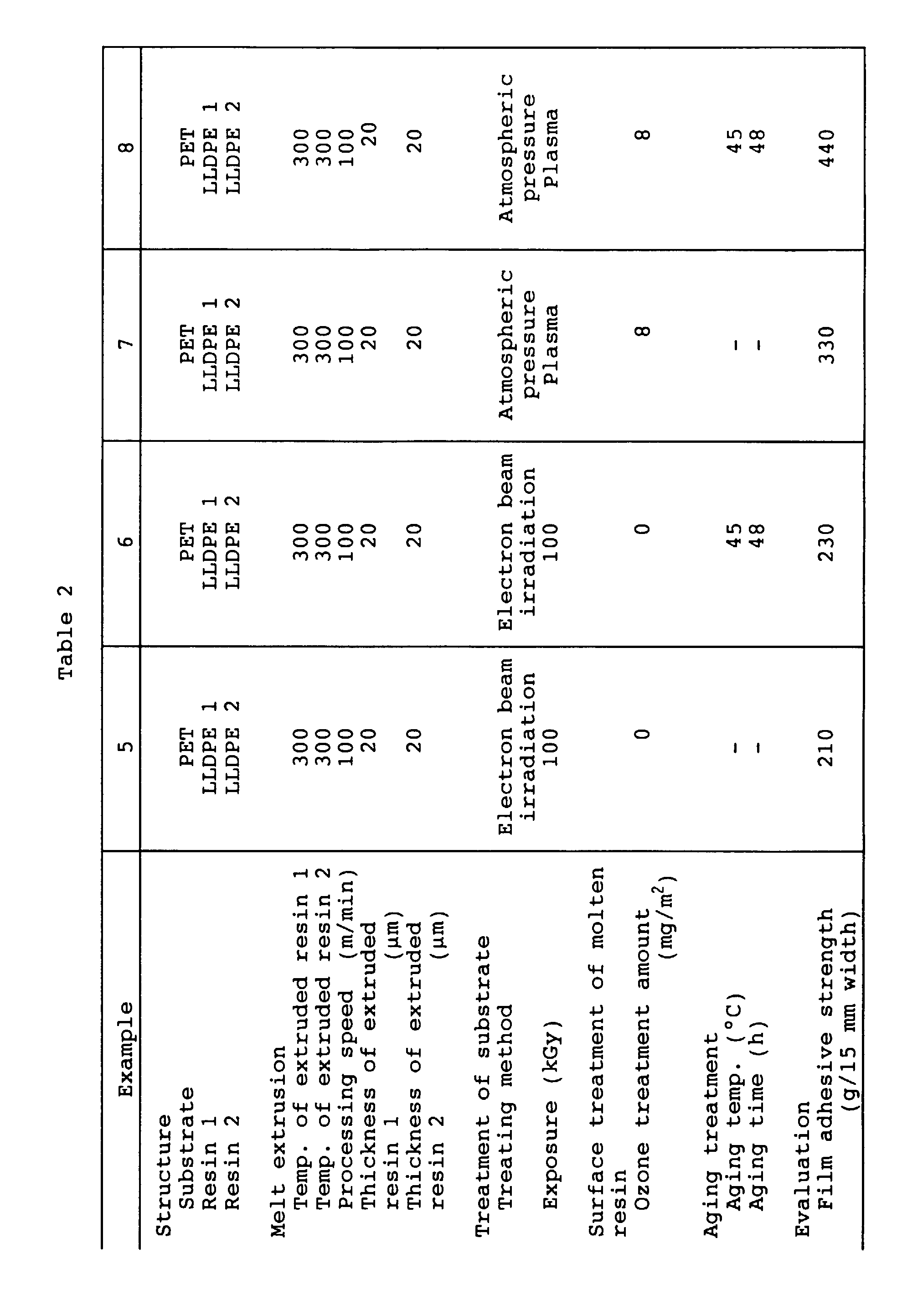

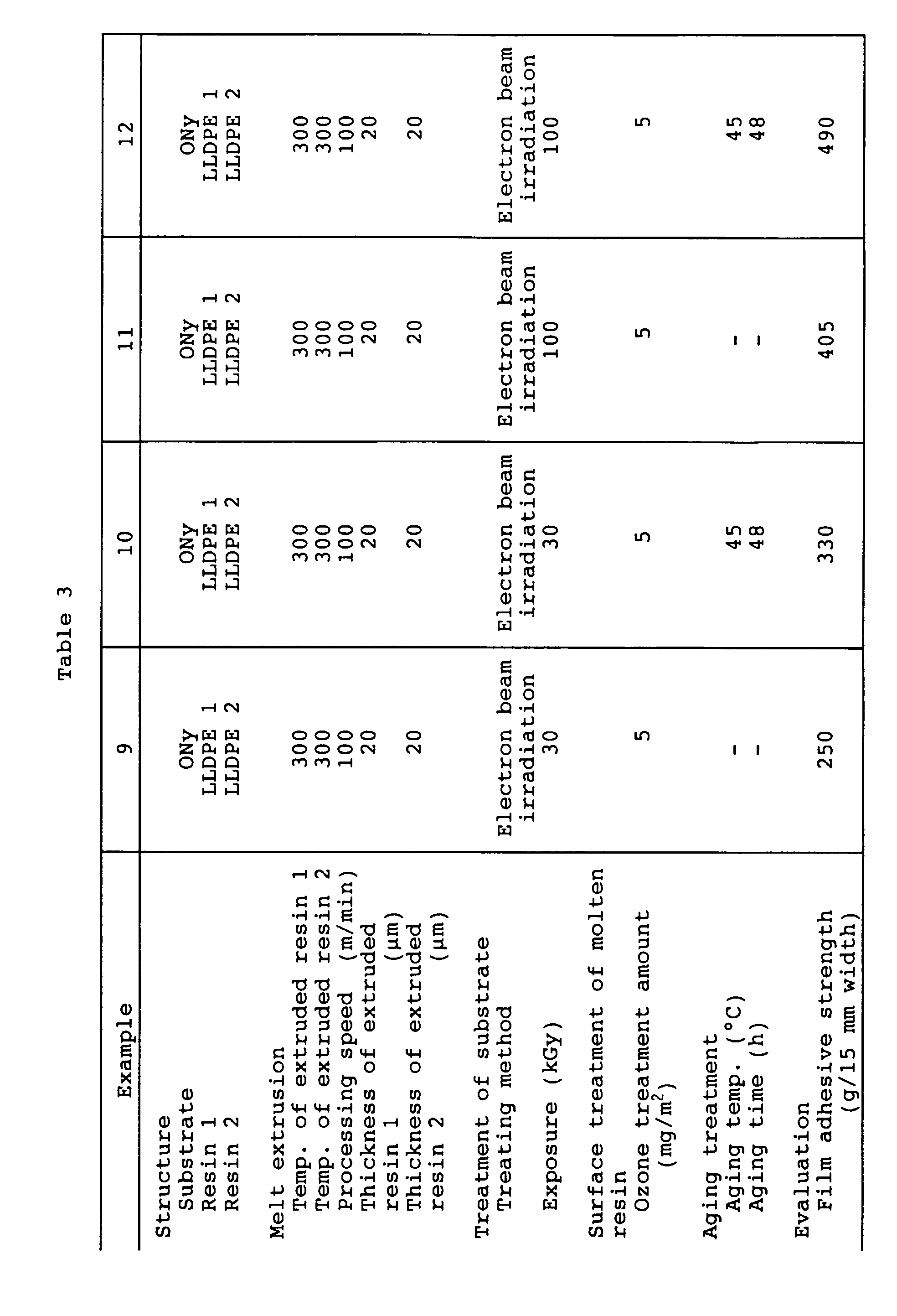

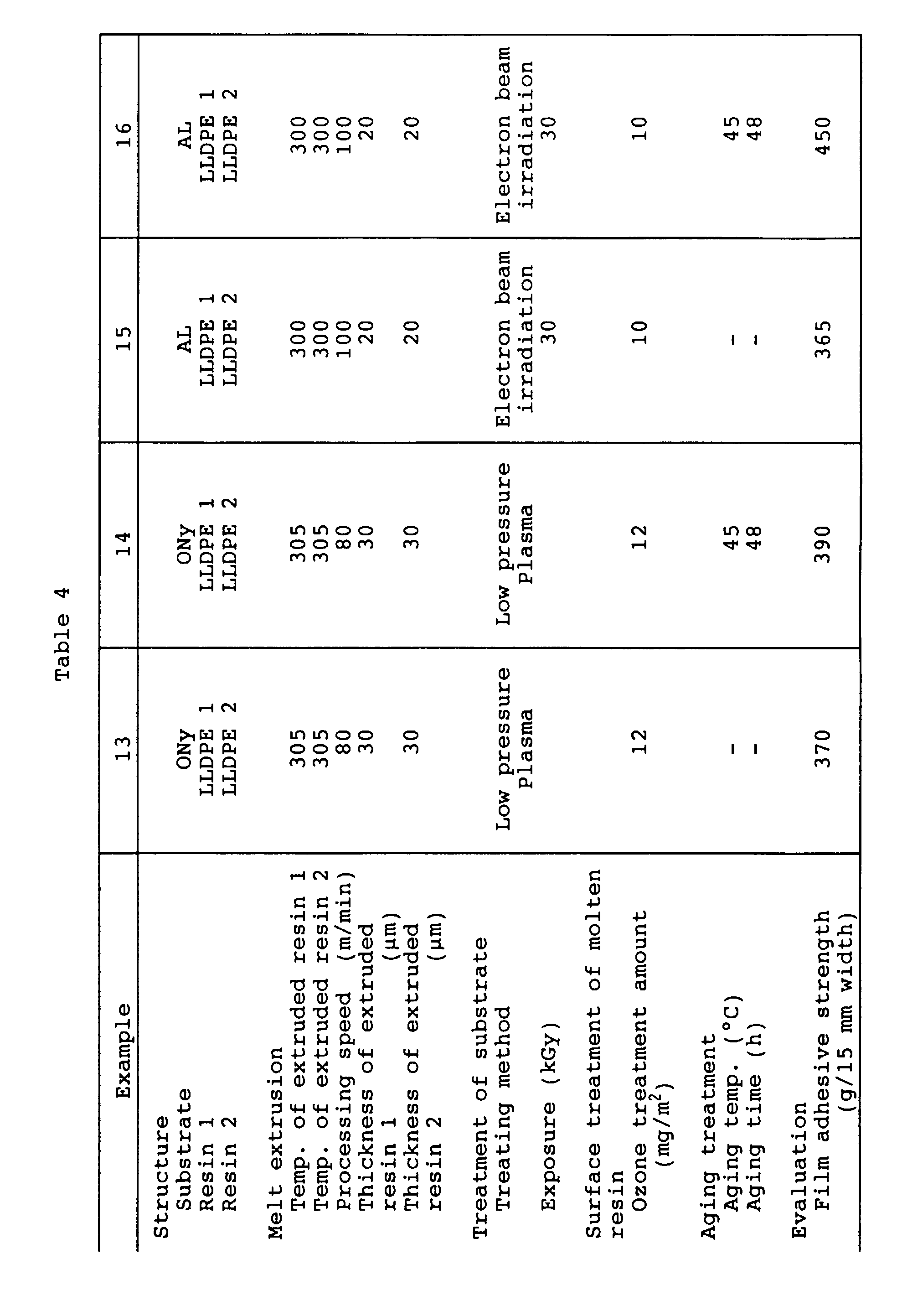

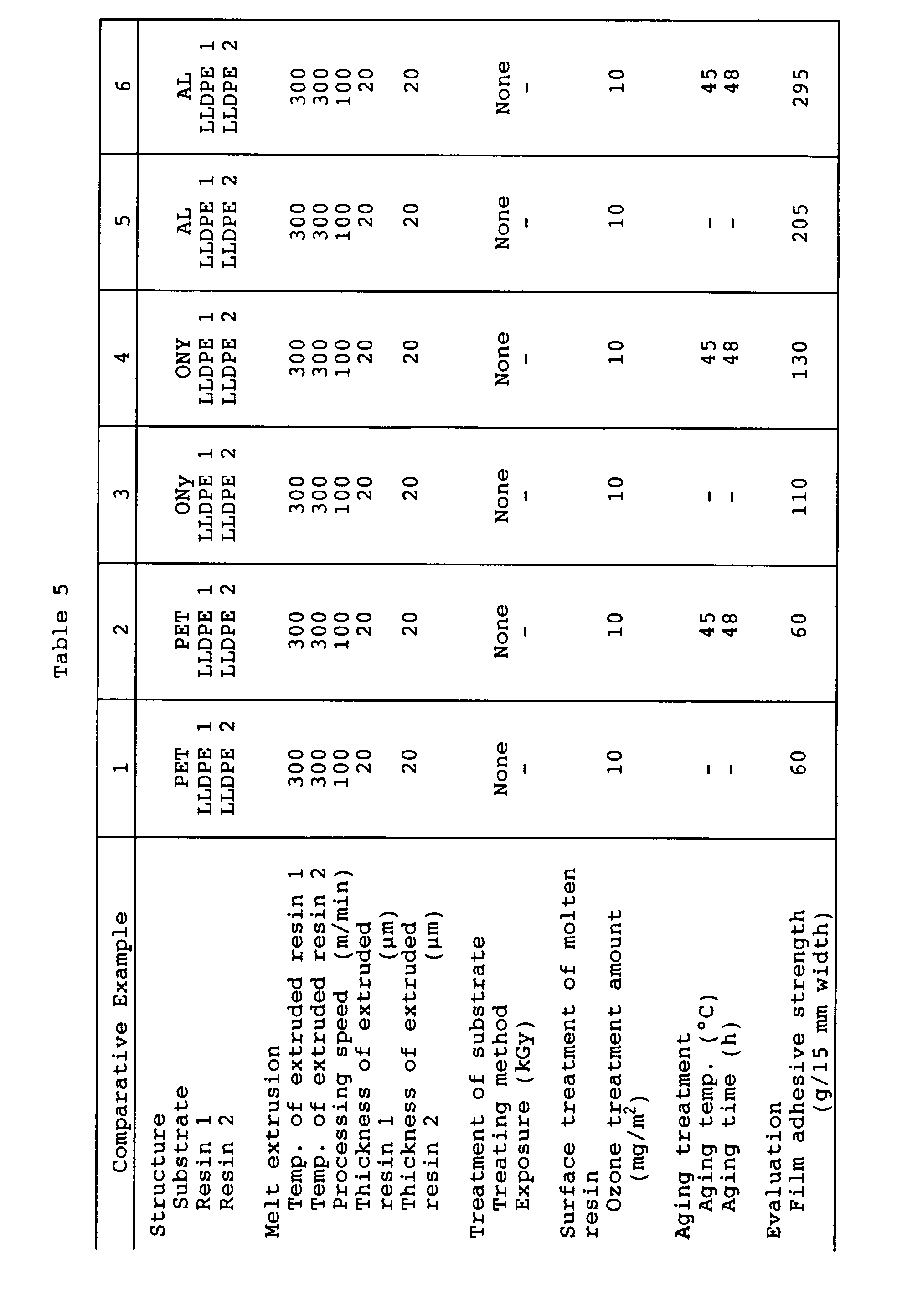

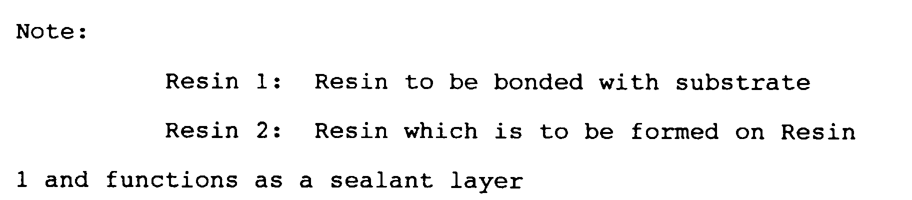

The symbol - in the Table indicates the case where no said treatment was conducted or no electron beam irradiation was conducted.

## Claims

1. A non-anchor extrusion coating process for producing a laminate, which process comprises the steps of:
(a) subjecting at least one surface of a substrate to surface activation in an atmosphere of an inert gas,
(b) melt-extruding a resin to form an extrudate in the form of film, and
(c) placing at least one surface of the extrudate in contact with said at least one activated surface of the substrate, and adhering the extrudate to the substrate by pressure to obtain a laminate.

2. A process according to claim 1, wherein the substrate is a plastic film or sheet having a thickness of 1000 µm or less.

3. A process according to claim 2, wherein the plastic film or sheet comprises at least one plastic selected from nylons, polyester resins, saponification products of ethylene-vinyl acetate copolymers, polyvinyl alcohols, polypropylene resins, cellophanes, cellulose resins, polyvinylidene chlorides, polystyrenes, polyvinyl chlorides, polycarbonates, polymethylmethacrylates, polyurethanes, fluorinated resins and polyacrylonitriles.

4. A process according to claim 1, 2 or 3, wherein the surface activation is an electron beam irradiation treatment, a low pressure plasma treatment, an atmospheric pressure plasma treatment or a corona discharge treatment.

5. A process according to claim 4, wherein the surface activation is an electron beam irradiation treatment which is carried out by irradiating the surface of the substrate with an electron beam at an exposure of 5 KGy or more;
the surface activation is a low pressure plasma treatment which is carried out by contacting the surface of the substrate with an excited inert gas under a pressure of from 0.1 to 5 Torr;
the surface activation is an atmospheric pressure plasma treatment which is carried out by contacting the surface of the substrate with an excited inert gas at atmospheric pressure; or
the surface activation is a corona discharge treatment which is carried out by passing the substrate through a corona atmosphere at a corona discharge density of 10 W min./m² or more.

6. A process according to any one of the preceding claims, wherein the surface activation is carried out in an inert gas atmosphere comprising argon, helium, krypton, neon, xenon or nitrogen and less than 1% by volume of oxygen.

7. A process according to any one of the preceding claims, wherein the resin in selected from polyethylene resins, polypropylene resins, ethylene-vinylester copolymer resins and ethylene-(meth)acrylate copolymer resins.

8. A process according to any one of the preceding claims, wherein the temperature of the surface of the extrudate immediately after melt-extruding is from 180°C to 340°C.

9. A process according to any one of the preceding claims wherein, prior to contacting the substrate, at least the surface of the extrudate to be placed into contact with the activated surface of the substrate is subjected to ozone treatment.

10. A process according to claim 9, wherein the ozone treatment is carried out by contacting the surface of the extrudate with ozone in an amount of from 1 to 12 mg/m².

11. A process according to any one of the preceding claims, wherein the laminate is further subjected to aging.

12. A process according to claim 11, wherein the laminate is aged at a temperature of from 30°C to 60°C.

13. A laminate obtainable by a process according to any one of claims 1 to 12.

14. A packaging material comprising a laminate obtainable by a process according to any one of claims 1 to 12.

15. Use of a laminate obtainable by a process according to any one claims 1 to 12 as a packaging material.
